# EUROPÄISCHE PATENTANMELDUNG

(11) **EP 1 507 330 A2**
(43) Veröffentlichungstag der Anmeldung: **16.02.2005**
(21) Anmeldenummer: 04013801.8
(22) Anmeldetag: 11.06.2004
(51) Int. Cl.: H02P 6/16

(54) **Einrichtung und Verfahren zur Rotorpositionsbestimmung einer elektrischen Maschine**

(30) Priorität: 14.08.2003 DE 10337564
(71) Anmelder: ROBERT BOSCH GMBH, 70442 Stuttgart (DE)
(72) Erfinder: Kern, Robert, 77830 Buehlertal (DE)

(57) **Zusammenfassung**

Einrichtung zur Rotorpositionsbestimmung einer elektrischen Maschine (1), der eine elektronische Kommutiervorrichtung (21) zugeordnet ist, mit einer Rotorpositionsmesseinrichtung (16) zur Beaufschlagung mindestens einer Wicklung (6) der Maschine mit der Rotorpositionserkennung dienenden Messimpulsen, wobei eine Rotorbewegungserkennungseinrichtung zur Bestimmung des relativen Drehwinkels/Drehwegs des Rotors (7) und eine das Messergebnis der Rotorpositionsmesseinrichtung (16) als Startwert und das Messergebnis der Rotorbewegungserkennungseinrichtung als Fortschreibewert verarbeitende, die aktuelle Rotorposition bestimmende Rotorpositionsberechnungseinrichtung (15) vorhanden ist und ein Verfahren zur Rotorpositionsbestimmung einer elektrischen Maschine (1).

## Beschreibung

Die Erfindung betrifft eine Einrichtung zur Rotorpositionsbestimmung einer elektrischen Maschine gemäß dem unabhängigen Anspruch 1 sowie ein entsprechendes Verfahren zur Rotorpositionsbestimmung gemäß dem unabhängigen Anspruch 7.

Um bei einer elektrischen Maschine eine wirkungsgradoptimierte Kommutierung zu erzielen, ist die Kenntnis der momentanen Drehlage des Rotors -im folgenden Rotorposition genannt- von großer Bedeutung. Es sind dabei verschiedene Verfahren bekannt, die eine sensorlose Messung der Rotorposition ermöglichen, so zum Beispiel aus der DE 100 36 413 A1 oder der US 5,569,990. Möglichkeiten zur sensorlosen Bestimmung der Rotorposition ergeben sich durch eine Beaufschlagung der Ständerwicklungen mit Stromimpulsen und dem Messen der Signalantwort. Aus einer Analyse der Signalantwort lässt sich dann die Rotorposition ermitteln.

Bei einer Einrichtung zur Rotorpositionsbestimmung einer elektrischen Maschine, der eine elektronische Kommutiervorrichtung zugeordnet ist, mit einer Rotorpositionsmesseinrichtung zur Beaufschlagung mindestens einer Wicklung der Maschine mit der Rotorpositionserkennung dienenden Messimpulsen, sind erfindungsgemäß eine Rotorbewegungserkennungseinrichtung zur Bestimmung des relativen Drehwinkels/Drehwegs des Rotors und eine das Messergebnis der Rotorpositionsmesseinrichtung als Startwert und das Messergebnis der Rotorbewegungserkennungseinrichtung als Fortschreibewert verarbeitende, die aktuelle Rotorposition bestimmende Rotorpositionsberechnungseinrichtung vorgesehen. Da die sensorlose Rotorpositionserkennung stets ein gewisses Zeitintervall für das Beaufschlagen der Stromimpulse, das Messen der Signalantwort und deren Analyse benötigt, in der die stromführenden Wicklungen des Motors kurzfristig von der Leistungszufuhr des Motors getrennt werden müssen, ist es nun in vorteilhafter Weise möglich, mittels der Rotorpositionsmesseinrichtung einen Startwert der Rotorposition zu ermitteln und dann mittels der Rotorbewegungserkennungseinrichtung, die bei ihrem Messvorgang keines Eingriffs in den laufenden Betrieb der elektrischen Maschine bedarf, fortlaufend die aktuelle Rotorposition zu bestimmen.

Eine vorteilhafte Ausgestaltung ergibt sich, wenn die Rotorbewegungserkennungseinrichtung eine mit der Rotorwelle mitdrehende Magnetanordnung und mindestens einen ortsfesten, mit dem Magnetfeld der Magnetanordnung zusammenwirkenden Rotationserkennungssensor aufweist. Mittels der mit der Rotorwelle mitdrehenden Magnetanordnung und deren mindestens auf einen ortsfesten Rotationserkennungssensor wirkenden Magnetfeld, ist es möglich, die Bewegung des Rotors, beziehungsweise die Drehung der Rotorwelle, zu ermitteln, ohne dass in den laufenden Betrieb oder die Ansteuerung der elektrischen Maschine eingegriffen werden muss.

Vorteilhaft ist es, wenn die Magnetanordnung einen koaxial auf der Rotorwelle sitzenden, fest mit der Rotorwelle verbundenen Ringmagneten aufweist. Der Ringmagnet weist kreisringsegmentartige Magnetelemente auf, die entlang des Umfangs eines kreisförmigen Trägerelements angeordnet sind. Dabei weist jedes Magnetelement zwei in etwa gleichgroße, magnetisch entgegengesetzt ausgerichtete Magnetpole auf, die je nach ihrer magnetischen Ausrichtung mit Nord oder Süd, beziehungsweise N oder S, bezeichnet werden. Die Anordnung der Magnetelemente ist so gewählt, dass sich entlang des Umfangs des Trägerelements eine alternierende Folge von Nordund Süd-Magnetpolen ergibt. Der genannte ortsfeste Rotationserkennungssensor kann die während der Drehung der Rotorwelle mittels der in alternierender Abfolge vorbeilaufenden Magnetpole hervorgerufenen Änderungen des Magnetfelds detektieren und damit eine Information bezüglich der Rotorwellendrehung liefern.

Mit Vorteil ist mindestens einer der Rotationserkennungssensoren ein Hallsensor. Ein Hallsensor detektiert ein Magnetfeld anhand der Ladungsverschiebung, die das Magnetfeld in einem stromdurchflossenen Messelement hervorruft. Obwohl analoge und digitale Hallsensoren gleichermaßen als Rotationserkennungssensoren eingesetzt werden können, erfahren digitale Hallsensoren in einer kostensensitiven Anwendung aufgrund ihrer kostengünstigeren Herstellung eine gewisse Bevorzugung. Ein digitaler Hallsensor kann den Übergang von einem Magnetpol zu einem anderen, entgegengesetzt magnetisch ausgerichteten Magnetpol detektieren und so eine Drehung des Ringmagneten, und damit der Rotorwelle, feststellen. Die Auflösungsgenauigkeit der Rotorbewegungserkennung ist daher abhängig von der Anzahl der Magnetelemente des Ringmagneten. Je mehr Magnetelemente auf dem Ringmagneten angeordnet sind, das heißt je mehr Übergänge zwischen unterschiedlich magnetisierten Magnetpolen vorhanden sind, desto genauer kann die Rotorbewegung ermittelt werden.

Des Weiteren ist es vorteilhaft, dass die Rotorbewegungserkennungseinrichtung mindestens zwei ortsfeste Rotationserkennungssensoren aufweist, die entlang des Umfangs des Ringmagneten voneinander beabstandet sind, wobei der Winkelabstand der Sensoren zueinander stets ungleich einem ganzzahligen Vielfachen des Winkelabstands der einzelnen Magnetpole des Ringmagneten ist. Mittels dieser Anordnung lässt sich die Auflösungsgenauigkeit der Rotorbewegungserkennung erhöhen. Dies sei beispielhaft nachstehend erläutert: Während ein einzelner, unipolarer Hallsensor bei der Annäherung eines Übergangs zwischen zwei Magnetpolen zwischen zwei Zuständen unterscheiden kann, nämlich "Magnetpolübergang nicht erfolgt" und "Magnetpolübergang erfolgt", so ergibt sich bei der Kombination zweier Hallsensoren, wobei beide jeweils unabhängig voneinander die genannten Zustände annehmen können, die Möglichkeit von vier unterscheidbaren Zuständen. Wichtig ist dabei, dass die Sensoren den genannten Winkelabstand erfüllen, da die Zustandsänderungen an den einzelnen Sensoren sonst zeitgleich erfolgen und damit zu einer Redundanz führen, die die Auflösungsgenauigkeit nicht erhöht. Außerdem kann die Drehrichtung erkannt werden.

Ein weiterer Vorteil ergibt sich, wenn die elektrische Maschine als Stellmotor, insbesondere als EC-Motor (elektronisch kommutierter Motor) ausgeführt ist. Stellmotoren sollen ohne merkliches Ansprechverhalten eine schnelle exakte Drehbewegung durchführen. Um den Stellmotor sofort mit dem maximalen Drehmoment in eine gewünschte Richtung drehen zu können, ist eine möglichst genaue Kenntnis der Rotorposition erforderlich, um den Motor wirkungsgradoptimiert kommutieren zu können.

Des Weiteren zeigt die Erfindung ein Verfahren zur Rotorpositionsbestimmung für eine elektrische Maschine auf, wobei bei der Maschine eine elektronische Kommutierung durchgeführt wird, und wobei eine Rotorpositionserkennung mittels der Beaufschlagung mindestens einer Wicklung der Maschine mit Messimpulsen durchgeführt wird, wobei erfindungsgemäß bei der Rotorpositionserkennung ein Startwert gemessen wird, fortlaufend eine Rotorbewegungserkennung durchgeführt wird, bei der der relative Drehwinkel/Drehweg des Rotors gemessen wird und durch Verrechnen des Startwerts und des relativen Drehwinkels/Drehwegs die aktuelle Rotorposition berechnet wird. Demnach wird die genaue, aber zeitaufwendige Rotorpositionserkennung zur Bestimmung eines Startwerts benutzt, um dann die aktuelle Rotorposition unter Einbeziehung des relativen Drehwinkels/Drehwegs der Rotorwelle zu berechnen.

Vorteilhaft ist es, dass die Rotorpositionserkennung bei Stillstand des Rotors erfolgt. Damit wird die Rotorpositionserkennung zu einem Zeitpunkt durchgeführt, bei dem das Beaufschlagen der Wicklungen der elektrischen Maschine mit Messimpulsen den Arbeitszustand der Maschine nicht beeinflusst.

Ein weiterer Vorteil ergibt sich, wenn der Drehwinkel/Drehweg des Rotors mit einem Drehrichtungssignal angezeigt wird. Bei elektrischen Maschinen, die nicht nur in einer Drehrichtung betrieben werden, ist es somit zusätzlich möglich anzugeben, in welcher Richtung sich die Rotorwelle dreht.

Vorteilhaft ist es zudem, dass die gemessenen relativen Drehwinkel/Drehwege je nach Drehrichtung des Motors addierend oder subtrahierend mit dem Startwert verrechnet werden. Damit ist eine einfache Berechnungsmöglichkeit aufgezeigt, mittels des Drehwinkels/Drehwegs und des Drehrichtungssignals auf Basis des ermittelten Startwerts stets die aktuelle Rotorposition anzugeben.

Die Erfindung ist anhand eines in der Zeichnung dargestellten Ausführungsbeispiels und den nachfolgenden Beschreibungen näher erläutert. Es zeigen:
- Figur 1: eine Anordnung mit einer elektrischen Maschine und einer erfindungsgemäßen Einrichtung, und
- Figur 2: einen Signalgraphen beim Betrieb der genannten Anordnung.

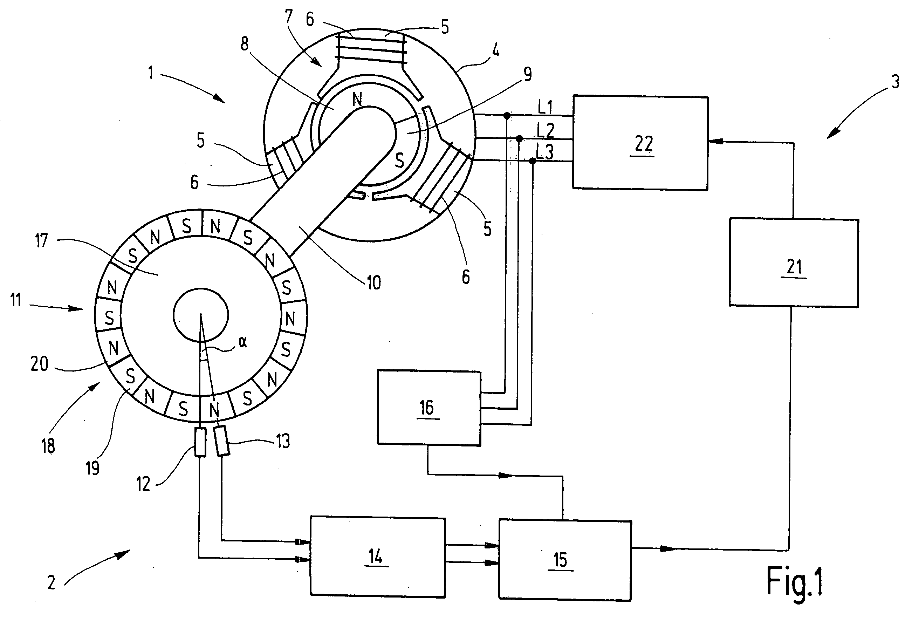

Figur 1 zeigt eine elektrische Maschine 1, eine Rotorpositionsbestimmungseinrichtung 2 und eine Maschinensteuerungseinrichtung 3, die die elektrische Maschine 1 steuert beziehungsweise regelt. Die elektrische Maschine 1 weist einen -symbolisch dargestellten- Stator 4 mit einem kreisförmigen Querschnitt auf, an dem drei Ständer 5 jeweils mit einem Winkelabstand von 120° -bezogen auf das Zentrum der Ständer- zueinander angeordnet sind. Die Ständer 5 tragen jeweils eine Ständerwicklung 6, wobei jede Ständerwicklung 6 mit einer der stromführenden Leitungen L1, L2 beziehungsweise L3 elektrisch verbunden ist und von Strom durchflossen wird. Die aufgrund des Stromflusses durch die Ständerwicklungen 6 entstehende elektromagnetische Kraft tritt in Wechselwirkung mit dem ringförmigen Rotor 7, auch als Polrad bekannt, der aus zwei in etwa gleichgroßen halbkreisringähnlichen Magnetpolen 8, 9 besteht, wobei die Magnetpole magnetisch entgegengesetzt ausgerichtet sind. Der Rotor 7 ist fest mit der Rotorwelle 10 verbunden, welche im Zentrum des Stators 4 drehbar gelagert ist und sich parallel zur -nicht dargestellten- Längserstreckung des Stators 4 erstreckt. Bei entsprechender Strombeaufschlagung der Ständerwicklungen 6 wird die Rotorwelle 10 somit in eine Drehbewegung versetzt.

Die Rotorpositionsbestimmungseinrichtung 2 weist einen Ringmagneten 11 einen ersten Hallsensor 12, einen zweiten Hallsensor 13, eine Sensorauswertungseinrichtung 14, eine Rotorpositionsberechnungseinrichtung 15 und eine Rotorpositionsmesseinrichtung 16 auf. Der Ringmagnet 11 weist ein kreisförmiges Trägerelement 17 auf, welches koaxial auf der Rotorwelle 10 sitzt und mit dieser fest verbunden ist. Entlang des Umfangs des Trägerelements 17 sind kreisringsegmentförmige Magnetelemente 18 angeordnet, die aus zwei in etwa gleichgroßen Magnetpolen 19, 20 mit jeweils entgegengesetzter magnetischer Ausrichtung bestehen. Die Anordnung der Magnetelemente 18 ist dabei so gewählt, dass sich entlang des von den Magnetelementen 18 gebildeten Rings eine alternierende Abfolge der Magnetpole 19 und 20 ergibt.

Unmittelbar entlang des Umfangs des Ringmagneten 11 befinden sich ortsfest zwei Hallsensoren 12 und 13, die in einem auf den Mittelpunkt der Rotorwelle 10 bezogenen Winkel α beabstandet sind, welcher halb so groß ist wie die Winkelöffnung eines Magnetpols 19 oder 20. Dreht sich die Rotorwelle 10, so bewegen sich die Magnetpole 19, 20 an den Sensoren 12, 13 vorbei und die Sensoren detektieren die Übergänge zwischen den unterschiedlichen Magnetpolen aufgrund des dort vorhandenen Wechsels der Magnetfeldausrichtung.

Die Ausgangssignale der Sensoren 12, 13 werden über Signalleitungen an die Sensorauswertungseinrichtung 14 geleitet. In der Sensorauswertungseinrichtung 14 wird mittels der Signale der Hallsensoren 12, 13 ein Rotorschrittsignal und ein Rotordrehrichtungssignal erzeugt. Diese beiden Signale werden an die Rotorpositionsberechnungseinrichtung 15 weitergeleitet, wo mit der Kenntnis des geometrischen Aufbaus der Rotorpositionsbestimmungseinrichtung 2 anhand der letzten bekannten Rotorposition die neue aktuelle Rotorposition berechnet wird.

Mittels der Rotorpositionsmesseinrichtung 16 können die Ständerwicklungen 6 der elektrischen Maschine 1 mit Prüfimpulsen beaufschlagt werden, um anhand der Signalantwort die aktuelle Rotorposition zu bestimmen. Für die Dauer des Messverfahrens muss die elektrische Maschine 1 kurzzeitig leistungsfrei geschaltet werden. Die von der Rotorpositionsmesseinrichtung 16 ermittelte Rotorposition wird dann mittels einer separaten Signalleitung an die Rotorpositionsberechnungseinrichtung 15 übermittelt und dort verarbeitet.

Die Maschinensteuerungseinrichtung 3 weist eine elektrische Kommutiervorrichtung 21 und eine Leistungsstufe 22 auf. Die Kommutiervorrichtung 21 erhält von der Rotorpositionsberechnungseinrichtung 15 die aktuelle Rotorposition und kann mit dieser Information die für den aktuellen Betriebszustand der elektrischen Maschine wirkungsgradoptimale Kommutierung mittels einer Signalleitung an die Leistungsstufe 22 übermitteln. Die Leistungsstufe 22 stellt der elektrischen Maschine die zum Betrieb benötigte Leistung zur Verfügung, indem sie den Strom mittels der einzelnen Zuleitungen L1, L2 und L3 gemäß der aktuellen Kommutierungsinformation liefert.

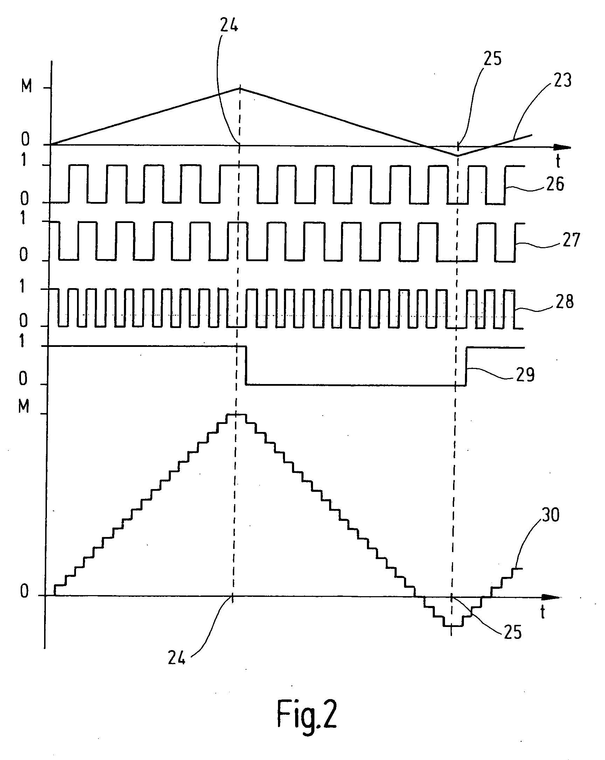

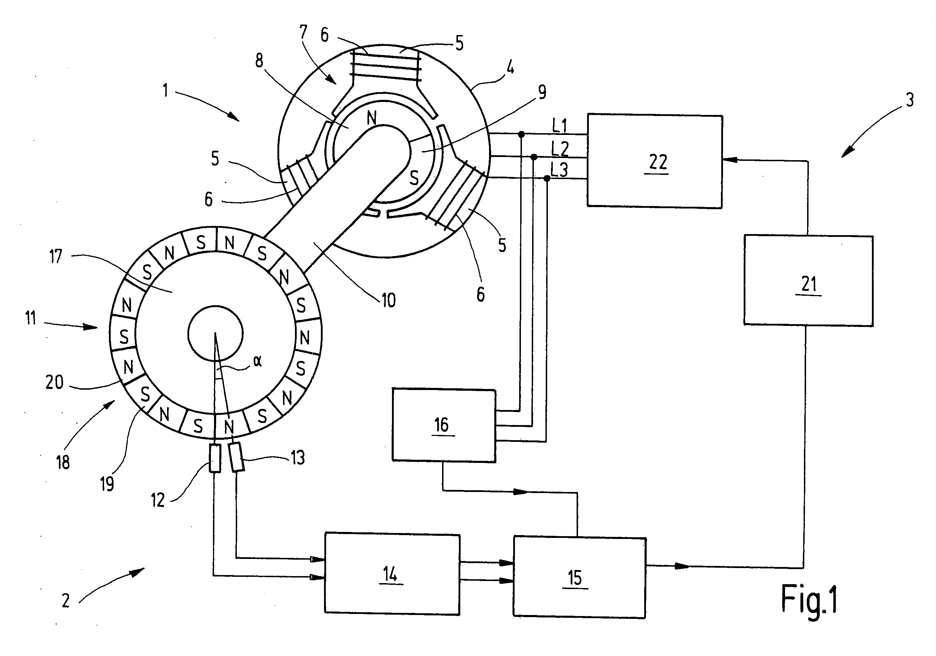

Figur 2 verdeutlicht die Wirkungskette von dem Ringmagneten 11 über die Hallsensoren 12, 13, die Sensorauswertungseinrichtung 14 bis hin zum Ausgang der Rotorpositionsberechnungseinrichtung 15. Der Graph 23 stellt beispielhaft die tatsächliche Rotorposition eines Stellmotors, wobei entlang der Abszisse der zeitliche Verlauf und entlang der Ordinate der Winkel der Rotorposition aufgetragen sind. Zunächst fährt der Motor aus einer Nullposition heraus einen ersten Reversierpunkt 24 mit konstanter Geschwindigkeit an. Nach dem Erreichen des ersten Reversierpunkts 24 (Rotorpositionswinkel M) reversiert der Motor und dreht in die entgegengesetzte Richtung bis zum zweiten Reversierpunkt 25, von wo aus er seine Drehrichtung erneut reversiert. Der Graph 26 zeigt das Ausgangssignal des ersten Hallsensors 12, und der Graph 27 zeigt das Ausgangssignal des zweiten Hallsensors 13. Dabei zeigen die Pegel "0" und "1" welche Art der Magnetfeldausrichtung der im Erfassungsbereich des jeweiligen Sensors liegende Magnetpol hat (also Nord oder Süd, bzw. N oder S). Die Signale 26 und 27 sind entlang der Zeitachse t versetzt, da ein Übergang zwischen zwei Magnetpolen die Hallsensoren 12, 13 aufgrund ihrer räumlichen Beabstandung nicht gleichzeitig passiert. Erfasst man das Signal 26 des ersten Hallsensors als höherwertiges Bit und das Signal 27 des zweiten Hallsensors als niederwertiges Bit, so ergeben sich bei einer 2-Bit-Darstellung folgende mögliche Zustände: 00, 01, 10, 11. Im hier gezeigten Beispiel ergibt sich für die 2-Bit-Darstellung der Signale des ersten und des zweiten Hallsensors 12, 13 daher nachfolgend genannte Abfolge: 01, 00, 10, 11, 01, 00, ... und um den ersten Reversierpunkt 24 ergibt sich beispielhaft diese Abfolge: ..., 01, 00, 10, 11, 10, 00, 01, ...

Aus der Art der Abfolge der verschiedenen Zustandsmöglichkeiten generiert die Sensorauswertungseinrichtung 14 ein Rotorschrittsignal 28, mittels einer XOR-Verknüpfung der Signale 26 und 27, und ein Rotordrehrichtungssignal 29. Um anhand der Signale 28 und 29 in der Rotorpositionsberechnungseinrichtung 15 die aktuelle Rotorposition zu berechnen, wird zu Beginn der Rotorbewegung die aktuelle Rotorposition mittels der Rotorpositionsmesseinrichtung 16 ermittelt und als Startwert an die Rotorpositionsberechnungseinrichtung 15 übermittelt. Im hier gezeigten Beispiel hat das Messverfahren zu Beginn eine Nulllage des Rotors ermittelt.

Mittels des Rotorschrittsignals 28 erkennt die Rotorpositionsberechnungseinrichtung 15 anhand einer absteigenden oder aufsteigenden Flanke, dass sich der Rotor gedreht hat. Da die geometrische Anordnung von Ringmagnet 11 und den Sensoren 12, 13 bekannt ist, liegt damit auch die Information vor, um welchen Winkel sich der Rotor gedreht hat. Im gezeigten Beispiel zeigt das Rotordrehsignal eine Winkeländerung α an, die halb so groß ist wie die Winkelöffnung der Magnetpole 19 und 20, also der Winkelbeabstandung der Hallsensoren 12, 13 entspricht. Ferner kann die Rotorpositionsberechnungseinrichtung 15 mittels des Rotordrehrichtungssignals 29 berücksichtigen, in welche Richtung sich die Rotorwelle 10 dreht. Entsprechend dem Rotordrehrichtungssignal 29 wird dann ein durch das Rotorschrittsignal 28 angezeigter Drehwinkelschritt der Rotorwelle 10 zur zuletzt bekannten Rotorposition addiert oder subtrahiert. Der errechnete Rotorpositionsverlauf 30 weist dann einen Anstieg bis zum ersten Reversierpunkt 24 auf, gefolgt von einer rückläufigen Bewegung bis zum zweiten Reversierpunkt 25, von wo aus sich wiederum ein Anstieg zeigt. Ein Vergleich des tatsächlichen Rotorpositionssignals 23 und des errechneten Rotorpositionsverlaufs 30 zeigt, dass mit der gezeigten Anordnung und dem beschriebenen Verfahren die aktuelle Rotorposition ohne eine weitere Betätigung der Rotorpositionsmesseinrichtung 16 bestimmt werden kann.

Es sei angemerkt, dass sich durch Variationen der Anzahl der Ständer 5, der Anordnung des Ringmagneten 11, der Anzahl der Magnetelemente 18, der Anzahl, Bauart und Anordnung der Hallsensoren, und weiterer Ausgestaltungsmöglichkeiten der Sensorauswertungseinrichtung 14 und der Rotorpositionsberechnungseinrichtung 15, eine Vielzahl von weiteren Ausführungsbeispielen ergeben, die alle von der erfindungsgemäßen Lehre umfasst werden.

## Patentansprüche

1. Einrichtung zur Rotorpositionsbestimmung einer elektrischen Maschine (1), der eine elektronische Kommutiervorrichtung (21) zugeordnet ist, mit einer Rotorpositionsmesseinrichtung (16) zur Beaufschlagung mindestens einer Wicklung (6) der Maschine (1) mit der Rotorpositionserkennung dienenden Messimpulsen, **gekennzeichnet durch** eine Rotorbewegungserkennungseinrichtung zur Bestimmung des relativen Drehwinkels/Drehwegs des Rotors (7) und eine das Messergebnis der Rotorpositionsmesseinrichtung (16) als Startwert und das Messergebnis der Rotorbewegungserkennungseinrichtung als Fortschreibewert verarbeitende, die aktuelle Rotorposition bestimmende Rotorpositionsberechnungseinrichtung (15).

2. Einrichtung nach Anspruch 1, **dadurch gekennzeichnet, dass** die Rotorbewegungserkennungseinrichtung eine mit der Rotorwelle (10) mitdrehende Magnetanordnung und mindestens einen ortsfesten, mit dem Magnetfeld der Magnetanordnung zusammenwirkenden Rotationserkennungssensor aufweist.

3. Einrichtung nach Anspruch 2, **dadurch gekennzeichnet, dass** die Magnetanordnung einen koaxial auf der Rotorwelle (10) sitzenden, fest mit der Rotorwelle (10) verbundenen Ringmagneten (11) aufweist.

4. Einrichtung nach Anspruch 2 oder 3, **dadurch gekennzeichnet, dass** mindestens einer der Rotationserkennungssensoren ein Hallsensor (12) ist.

5. Einrichtung nach Anspruch 3 oder 4, **dadurch gekennzeichnet, dass** die Rotorbewegungserkennungseinrichtung mindestens zwei Rotationserkennungssensoren (12, 13) aufweist, die entlang des Umfangs des Ringmagneten (11) voneinander beabstandet sind, wobei der Winkelabstand der Sensoren (12, 13) zueinander stets ungleich einem ganzzahligen Vielfachen des Winkelabstands der einzelnen Magnetpole (19, 20) des Ringmagneten (11) ist.

6. Einrichtung nach einem der vorhergehenden Ansprüche, **dadurch gekennzeichnet, dass** die elektrische Maschine (1) ein Stellmotor, insbesondere ein EC-Motor (elektronisch kommutierter Motor) ist.

7. Verfahren zur Rotorpositionsbestimmung für eine elektrische Maschine (1), insbesondere unter Verwendung einer Einrichtung nach einem oder mehreren der vorhergehenden Ansprüche, wobei bei der Maschine eine elektronische Kommutierung durchgeführt wird, und wobei eine Rotorpositionserkennung mittels der Beaufschlagung mindestens einer Wicklung der Maschine mit Messimpulsen durchgeführt wird, **dadurch gekennzeichnet, dass** bei der Rotorpositionserkennung ein Startwert gemessen wird, dass fortlaufend eine Rotorbewegungserkennung durchgeführt wird, bei der der relative Drehwinkel/Drehweg des Rotors (7) gemessen wird und dass durch Verrechnen des Startwerts und des relativen Drehwinkels/Drehwegs die aktuelle Rotorposition berechnet wird.

8. Verfahren nach Anspruch 7, **dadurch gekennzeichnet, dass** die Rotorpositionserkennung bei Stillstand des Rotors (7) erfolgt.

9. Verfahren nach einem der vorhergehenden Ansprüche, **dadurch gekennzeichnet, dass** der Drehwinkel/Drehweg des Rotors (7) mit einem Drehrichtungssignal angezeigt wird.

10. Verfahren nach einem der vorhergehenden Ansprüche, **dadurch gekennzeichnet, dass** die gemessenen relativen Drehwinkel/Drehwege je nach Drehrichtung des Rotors (7) addierend oder subtrahierend mit dem Startwert verrechnet werden.
